# EUROPEAN PATENT SPECIFICATION

(11) **EP 4 435 578 B1**
(45) Date of publication and mention of the grant of the patent: **26.08.2026**
(21) Application number: 22909894.2
(22) Date of filing: 17.12.2022
(51) Int. Cl.: G06F 3/06, G06F 12/0862, G06F 12/0895

(54) **CACHE MANAGEMENT METHOD AND APPARATUS, AND SYSTEM AND STORAGE MEDIUM**
CACHE-VERWALTUNGSVERFAHREN UND -VORRICHTUNG SOWIE SYSTEM UND SPEICHERMEDIUM
PROCÉDÉ ET APPAREIL DE PRISE EN CHARGE DE CACHE, ET SYSTÈME ET SUPPORT D'INFORMATIONS

(30) Priority: 22.12.2021 CN 202111576250; 14.02.2022 CN 202210135514
(43) Date of publication of application: 25.09.2024
(73) Proprietor: Huawei Technologies Co., Ltd., Shenzhen, Guangdong 518129 (CN)
(72) Inventor: ZHOU, Yigang, Shenzhen, Guangdong 518129 (CN); ZHU, Xiaoming, Shenzhen, Guangdong 518129 (CN)
(74) Representative: Gill Jennings & Every LLP
(86) International application number: PCT/CN2022/139806
(87) International publication number: WO 2023/116581

(56) References cited:
- CN-A- 104 394 099
- CN-A- 107 291 629
- US-A1- 2019 004 954
- US-A1- 2019 303 303
- US-A1- 2020 117 620
- US-B2- 9 983 997

## Description

### TECHNICAL FIELD

This application relates to the computer field, and in particular, to a cache management method, apparatus, and system, and a storage medium.

### BACKGROUND

A memory storage is an indispensable and important component in a server, and a processor needs to access the memory storage. The memory storage is usually a large-capacity and low-cost storage medium, and a read/write delay of the memory storage is usually high. This affects access efficiency of the processor.

To improve the access efficiency of the processor, currently, a cache storage whose read/write delay is lower than the read/write delay of the memory storage is disposed between the processor and the memory storage. The cache storage is configured to pre-cache data that is recently accessed frequently and that is in the memory storage. In this way, the processor accesses the data from the cache storage. Although the access efficiency of the processor can be improved via the cache storage, utilization of the current cache storage is still low.

US 2020/117620 A1 relates to multi-core systems which provide shared access to one or more memory devices where a core connected to such a system may implement its own data cache. US 9 983 997 B2 relates to a cache management technology which allows data stored in non-sequential blocks on a storage system to be returned to a cache in advance of a call for the data based on a defined event in a host device

### SUMMARY

The invention is set out in the appended set of claims. The dependent claims set out particular embodiments.

This application provides a cache management method, apparatus, and system, and a storage medium, to improve utilization of a cache storage. The technical solutions are as follows.

According to a first aspect, this application provides a processor system. The system includes a processor and a memory controller, the processor and the memory controller are connected through a first channel and a second channel, the first channel is used to perform a memory read/write operation, and the second channel is used to transmit event information corresponding to the memory read/write operation. The processor is configured to send event information of a first event to the memory controller through the second channel, and the first event is an event that is executed by the processor and in which a memory storage needs to be accessed. The memory controller is configured to manage a cache storage based on the event information, and the cache storage is configured to cache a part of data that is in the memory storage.

Because the processor obtains the event information of the first event when executing the first event, the processor sends the event information of the first event to the memory controller through the second channel. The memory controller receives the event information of the first event through the second channel. In this way, the memory controller can sense, based on the event information of the first event, the first event executed by the processor, and manage the cache storage based on the event information of the first event, to improve utilization of the cache storage.

In a possible implementation, the first event includes one or more of the following: a thread switching event, a page table walk event, or a cache line eviction event, where the thread switching event is used to switch a first thread from a running state to a preparation state, the first thread is a thread that is run by the processor, the page table walk event is used to query a physical address of a data block that is in the memory storage and that is to be accessed by the processor, and the cache line eviction event is used to evict a data block from a cache of the processor.

In another possible implementation, the first event includes the thread switching event, and the event information includes identification information of the first thread.

In another possible implementation, the cache storage includes a first cache storage and a second cache storage, and the first cache storage is configured to cache a part of data that is in the second cache storage. The memory controller is configured to release first storage space based on the identification information, the first cache storage includes the first storage space, and the first storage space is used to store a data block of the first thread.

The processor switches the running state of the first thread to the preparation state by executing the thread switching event, and event information of the thread switching event includes the identification information of the first thread. Therefore, the memory controller releases, based on the identification information, the storage space that is occupied by the data block of the first thread and that is in the first cache storage. The storage space may be used to store a data block of a thread that is run by the processor or a data block of a thread to be started. This improves utilization of the first cache storage.

In another possible implementation, the memory controller includes the first cache storage, and the memory controller is connected to the second cache storage through a bus.

In another possible implementation, the memory controller is configured to: obtain, based on the identification information, a first data block stored in the first cache storage, and the first data block is a data block of the first thread; when the first data block is modified, store the first data block in the second cache storage or the memory storage; and mark a state of the first storage space in which the first data block is located as an idle state. After the state of the first storage space is marked as the idle state, the first storage space is released. The first storage space may be used to store the data block of the thread that is run by the processor or the data block of the thread to be started. This improves the utilization of the first cache storage.

In another possible implementation, the event information further includes a physical address of a second data block that is in the memory storage, the cache of the processor includes the second data block, the second data block is modified, and the second data block is a data block of the first thread. The memory controller is further configured to allocate second storage space in the second cache storage based on the identification information and the physical address of the second data block, and the second storage space is used to store the second data block. In this way, the memory controller receives a write request sent by the processor. The write request includes the second data block, and directly stores the second data block in the second storage space, to improve data writing efficiency, so that utilization of the second cache storage is improved.

In another possible implementation, the first event includes the page table walk event, the event information includes an address of a first memory page, and the first memory page is a memory page in which the to-be-accessed data block is located.

In another possible implementation, the memory controller is configured to: read, from the memory storage, data included in the first memory page, and store, in the cache storage, the data included in the first memory page. In this way, when receiving a read request used to read the to-be-accessed data block, the memory controller directly reads the to-be-accessed data block from the cache storage and sends the read data block to the processor. This improves reading efficiency and improves the utilization of the cache storage.

In another possible implementation, the first event includes the cache line eviction event, the event information includes attribute information of the data block to be evicted by the processor, and the attribute information indicates an accessing status of the to-be-evicted data block.

In another possible implementation, the memory controller is further configured to: receive a write request sent by the processor, and the write request includes the to-be-evicted data block; and store, in the cache storage, a correspondence between the to-be-evicted data block and the attribute information. In this way, attribute information of the to-be-evicted data block stored in the first cache storage is the same as the attribute information of the to-be-evicted data block stored in the cache of the processor, and an operation performed by the memory controller based on the attribute information of the data block is the same as an operation performed by the processor based on the attribute information of the data block. This can improve the utilization of the cache storage.

According to a second aspect, this application provides a cache management method. The method is applied to a processor system, including a processor and a memory controller. The processor and the memory controller are connected through a first channel and a second channel, the first channel is used to perform a memory read/write operation, and the second channel is used to transmit event information corresponding to the memory read/write operation. In the method, the memory controller receives, through the second channel, event information that is of a first event and that is sent by the processor, where the first event is an event that is executed by the processor and in which a memory storage needs to be accessed. The memory controller manages a cache storage based on the event information, where the cache storage is configured to cache a part of data that is in the memory storage.

Because the processor obtains the event information of the first event when executing the first event, the processor sends the event information of the first event to the memory controller through the second channel. The memory controller receives the event information of the first event through the second channel. In this way, the memory controller can sense, based on the event information of the first event, the first event executed by the processor, and manage the cache storage based on the event information of the first event, to improve utilization of the cache storage.

In a possible implementation, the first event includes one or more of the following: a thread switching event, a page table walk event, or a cache line eviction event, where the thread switching event is used to switch a first thread from a running state to a preparation state, the first thread is a thread that is run by the processor, the page table walk event is used to query a physical address of a data block that is in the memory storage and that is to be accessed by the processor, and the cache line eviction event is used to evict a data block from a cache of the processor.

In another possible implementation, the first event includes the thread switching event, and the event information includes identification information of the first thread.

In another possible implementation, the cache storage includes a first cache storage and a second cache storage, and the first cache storage is configured to cache a part of data that is in the second cache storage. The memory controller releases first storage space based on the identification information, where the first cache storage includes the first storage space, and the first storage space is used to store a data block of the first thread.

The processor switches the running state of the first thread to the preparation state by executing the thread switching event, and event information of the thread switching event includes the identification information of the first thread. Therefore, the memory controller releases, based on the identification information, the storage space that is occupied by the data block of the first thread and that is in the first cache storage. The storage space may be used to store a data block of a thread that is run by the processor or a data block of a thread to be started. This improves utilization of the first cache storage.

In another possible implementation, the memory controller includes the first cache storage, and the memory controller is connected to the second cache storage through a bus.

In another possible implementation, the memory controller obtains, based on the identification information, a first data block stored in the first cache storage, and the first data block is a data block of the first thread. When the first data block is modified, the memory controller stores the first data block in the second cache storage or the memory storage. The memory controller marks a state of the first storage space in which the first data block is located as an idle state. After the state of the first storage space is marked as the idle state, the first storage space is released. The first storage space may be used to store the data block of the thread that is run by the processor or the data block of the thread to be started. This improves the utilization of the first cache storage.

In another possible implementation, the event information further includes a physical address of a second data block that is in the memory storage, the cache of the processor includes the second data block, the second data block is modified, and the second data block is a data block of the first thread. The memory controller allocates second storage space in the second cache storage based on the identification information and the physical address of the second data block, and the second storage space is used to store the second data block. In this way, the memory controller receives a write request sent by the processor. The write request includes the second data block, and directly stores the second data block in the second storage space, to improve data writing efficiency, so that utilization of the second cache storage is improved.

In another possible implementation, the memory controller receives the write request sent by the processor, and the write request includes the second data block. The memory controller stores the second data block in the second storage space. After receiving the write request, the memory controller directly stores the second data block in the second storage space, so that the first cache storage can be configured to store the data block of the thread that is run by the processor or the data block of the thread to be started. This improves the utilization of the first cache storage.

In another possible implementation, the memory controller receives, through the second channel, a switching complete message sent by the processor, and the closing complete message indicates the processor to switch the running state of the first thread to the preparation state. The memory controller releases, in the second cache storage based on the switching completion message, space occupied by a memory page corresponding to the first thread. After switching of the first thread is completed, the space occupied by the memory page corresponding to the first thread is released. In this way, the memory page can be prevented from being written into the memory storage each time a data block in the memory page is modified. After the switching of the first thread is completed, the memory page can be written into the memory storage together. This improving memory writing efficiency.

In another possible implementation, the first event includes the page table walk event, the event information includes an address of a first memory page, and the first memory page is a memory page in which the to-be-accessed data block is located.

In another possible implementation, the memory controller reads, from the memory storage, data included in the first memory page, and stores, in the cache storage, the data included in the first memory page. In this way, when receiving a read request used to read the to-be-accessed data block, the memory controller directly reads the to-be-accessed data block from the cache storage and sends the read data block to the processor. This improves reading efficiency and improves the utilization of the cache storage.

In another possible implementation, the first event includes the cache line eviction event, the event information includes attribute information of the data block to be evicted by the processor, and the attribute information indicates an accessing status of the to-be-evicted data block.

In another possible implementation, the memory controller receives a write request sent by the processor, and the write request includes the to-be-evicted data block. The memory controller stores, in the cache storage, a correspondence between the to-be-evicted data block and the attribute information. In this way, attribute information of the to-be-evicted data block stored in the first cache storage is the same as the attribute information of the to-be-evicted data block stored in the cache of the processor, and an operation performed by the memory controller based on the attribute information of the data block is the same as an operation performed by the processor based on the attribute information of the data block. This can improve the utilization of the cache storage.

### BRIEF DESCRIPTION OF DRAWINGS

FIG. 1 is a schematic diagram of a structure of a storage system according to an embodiment of this application;
FIG. 2 is a schematic diagram of a structure of another storage system according to an embodiment of this application;
FIG. 3 is a flowchart of a cache management method according to an embodiment of this application;
FIG. 4 is a flowchart of another cache management method according to an embodiment of this application;
FIG. 5 is a flowchart of another cache management method according to an embodiment of this application;
FIG. 6 is a flowchart of another cache management method according to an embodiment of this application;
FIG. 7 is a schematic diagram of a structure of a processor system according to an embodiment of this application;
FIG. 8 is a schematic diagram of a structure of a cache management apparatus according to an embodiment of this application;
FIG. 9 is a schematic diagram of a structure of another cache management apparatus according to an embodiment of this application;
FIG. 10 is a schematic diagram of a structure of a memory controller according to an embodiment of this application; and
FIG. 11 is a schematic diagram of a structure of a processor according to an embodiment of this application.

### DESCRIPTION OF EMBODIMENTS

The following further describes in detail implementations of this application with reference to the accompanying drawings.

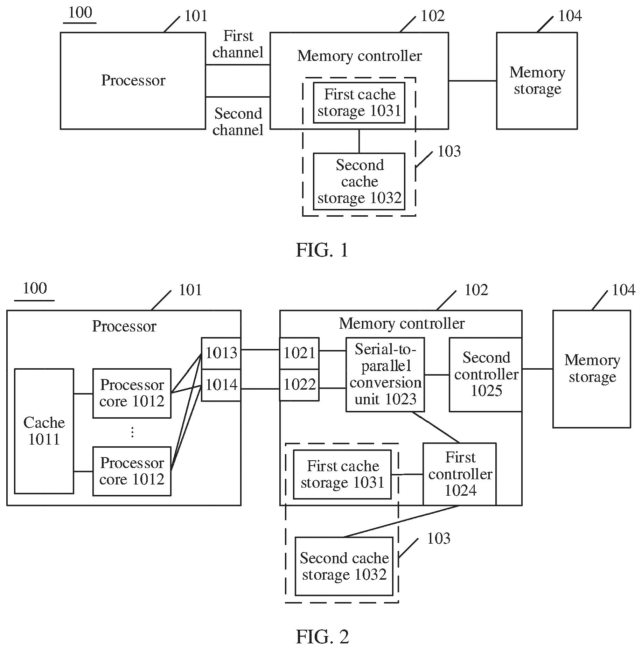

Refer to FIG. 1. An embodiment of this application provides a storage system 100. The storage system 100 includes:
a processor 101 and a memory controller 102, where the processor 101 and the memory controller 102 are connected through a first channel and a second channel. The first channel is used to perform a memory read/write operation, and the second channel is used to transmit event information corresponding to the memory read/write operation.

Refer to FIG. 1. The processing system 100 further includes a cache storage 103 and a memory storage 104. The cache storage 103 is configured to cache a part of data that is in the memory storage 104. The data cached in the cache storage 103 is generally data that recently has high access popularity in the memory storage 104.

The memory controller 102 is configured to manage the cache storage 103 and the memory storage 104. For example, the memory controller 102 caches the data that has the high access popularity in the memory storage 104 into the cache storage 103. When the processor 101 performs a memory read operation through the first channel, the memory controller 102 reads, from the cache storage 103, data that needs to be read by the processor 101, and sends the data to the processor 101 through the first channel; and/or when the processor 101 performs a memory write operation through the first channel, the memory controller 102 writes, into the cache storage 103, data that needs to be written by the processor 101, and then, the data is migrated from the cache storage 102 to the memory storage 104.

A read/write bandwidth of the cache storage 103 is higher than a read/write bandwidth of the memory storage 104, and a read/write delay of the cache storage 103 is less than a read/write delay of the memory storage 104. A capacity of the memory storage 104 is greater than a capacity of the cache storage 103. The memory storage 104 is usually a large-capacity storage medium. For example, the capacity of the memory storage 104 may be 1G, 2G, 4G, 8G, or the like.

In some embodiments, a read/write speed of the processor 101 is high, and the memory storage 104 cannot meet the read/write speed of the processor 101. Therefore, the memory controller 102 caches, in the cache storage 103, the data that has the high access popularity in the memory storage 104. When performing the memory read operation, the processor 101 sends a read request to the memory controller 102 through the first channel. The memory controller 102 receives the read request, reads data from the cache storage 103 based on the read request, and sends the read data to the processor 101 through the first channel. Alternatively, when performing the memory write operation, the processor 101 sends a write request to the memory controller 102 through the first channel. The write request includes data that the processor 101 needs to write. The memory controller 102 receives the write request, and stores, in the cache storage 103, the data in the write request. Then, the memory controller 102 stores, in the memory storage 104, the data in the cache storage 103.

Refer to FIG. 1. The cache storage 103 includes a first cache storage 1031 and a second cache storage 1032. The first cache storage 1031 is located in the memory controller, and the memory controller 102 is connected to the second cache storage 1032 through a bus. The first cache storage 1031 is configured to cache a part of data that is in the second cache storage 1032. Access popularity of data cached in the first cache storage 1031 is generally higher than access popularity of the data cached in the second cache storage 1032.

A read/write bandwidth of the first cache storage 1031 is higher than a read/write bandwidth of the second cache storage 1032, and a read/write delay of the first cache storage 1031 is less than a read/write delay of the second cache storage 1032. To meet the read/write speed of the processor 101, the memory controller 102 caches, in the first cache storage 1031, data that has high access popularity in the second cache storage 1032. In this way, the processor 101 sends a read request to the memory controller 102. The memory controller 102 receives the read request, reads data from the first cache storage 1031 based on the read request, and sends the read data to the processor 101. Alternatively, the processor 101 sends a write request to the memory controller 102, where the write request includes data that the processor 101 needs to write. The memory controller 102 receives the write request, and stores, in the first cache storage 1031, the data in the write request. Then, the memory controller 102 caches, into the second cache storage 1032, the data in the first cache storage 1031, and stores, in the memory storage 104, the data in the second cache storage 1032.

Refer to FIG. 2. A processor 101 includes a cache 1011 and at least one processor core 1012. The at least one processor core 1012 is configured to process a service. The cache 1011 in the processor 101 is configured to store intermediate data obtained when the at least one processor core 1012 processes the service. Optionally, the data stored in the cache 1011 includes data read by the processor 101 and/or data that needs to be written into a memory storage 104.

Refer to FIG. 2. A processor 101 further includes a first serial interface 1013 and a second serial interface 1014, and a memory controller 102 further includes a third serial interface 1021 and a fourth serial interface 1022. The first serial interface 1013 of the processor 101 and the third serial interface 1021 of the memory controller 102 are connected through a serial bus, and the second serial interface 1014 of the processor and the fourth serial interface 1022 of the memory controller 102 are connected through a serial bus. A first channel includes the first serial interface 1013, the third serial interface 1021, and the serial bus connecting the first serial interface 1013 and the third serial interface 1021. A second channel includes the second serial interface 1014, the fourth serial interface 1022, and the serial bus connecting the second serial interface 1014 and the fourth serial interface 1022.

In some embodiments, that the processor 101 performs a memory read operation through the first channel may be: The processor 101 sends a read request through the first serial interface 1013; and the memory controller 102 receives the read request through the third serial interface 1021, reads data from a cache storage 103 based on the read request, and sends the read data to the processor 101 through the third serial interface 1201.

In some embodiments, that the processor 101 performs a memory write operation through the first channel may be: The processor 101 sends a write request through the first serial interface 1013, where the write request includes data that the processor 101 needs to write; and the memory controller 102 receives the write request through the third serial interface 1021, and stores, in the cache storage 103, the data in the write request.

In some embodiments, for event information corresponding to a memory read/write operation, the processor 101 sends the event information through the second serial interface 1014, and the memory controller 102 receives the event information through the fourth serial interface 1022.

Refer to FIG. 2. The memory controller 102 further includes a serial-to-parallel conversion unit 1023, a first controller 1024, and a second controller 1025. The serial-to-parallel conversion unit 1023 is separately connected to the third serial interface 1021, the fourth serial interface 1022, the first controller 1024, and the second controller 1025. The first controller 1024 is connected to a second cache storage 1032 through a bus. Optionally, the first controller 1024 may be further connected to a first cache controller 1031. The second controller 1025 is connected to a memory storage 104 through a bus.

Information (for example, the event information, the read request, or the write request) sent by the processor 101 to the memory controller 102 is serial information. The third serial interface 1021 or the fourth serial interface 1022 receives the serial information. The serial-to-parallel conversion unit 1023 converts the serial information into parallel information. The first controller 1024 accesses the first cache storage 1031 or the second cache storage 1032 based on the parallel information, or the second controller 1025 accesses the memory storage 104 based on the parallel information.

In some embodiments, the processor 101 usually reads and writes a memory in a unit of a data block, and the memory storage 104 stores data in a unit of a memory page. Generally, one memory page includes at least one data block, and a data amount of the memory page is greater than or equal to a data amount of the data block. For example, a capacity of the data block is usually 64 bytes, and a data amount of the memory page is 64 KB.

In some embodiments, the memory controller 102 is a serial memory controller or the like, the first cache storage 1031 is a static random access memory (static random access memory, SRAM) or the like, the second cache storage 1032 is a dynamic random access memory (dynamic random access memory, DRAM) or the like, and the memory storage 104 is a storage class memory (storage class memory, SCM) or the like. The first channel is a serial memory access channel or the like, and the second channel is an out-of-band message channel or the like.

Because a read/write delay of the first cache storage 1031 is higher than a read/write delay of the second cache storage 1032, and a read/write delay of the second cache storage 1032 is higher than a read/write delay of the memory storage 104. To improve data access efficiency of the processor 101, data is migrated between the first cache storage 1031, the second cache storage 1032, and the memory storage 104 in an automatic prefetch manner, to cache data that has high access popularity in the memory storage 104 in the first cache storage 1031 and the second cache storage 1032. When the processor 101 reads and writes data, the memory controller 102 reads and writes the data in the first cache storage 1031 or the second cache storage 1032. The read/write delay of the first cache storage 1031 and the read/write delay of the second cache storage 1032 are both lower than the read/write delay of the memory storage 104, so that data access efficiency of the processor 101 is improved.

In addition, it is found that currently, the processor 101 executes an event in a service processing process, and the event is related to memory access. The processor 101 needs to access the memory storage 104 in a process of executing the event. The event executed by the processor 101 helps the memory controller 102 determine data to be migrated between the first cache storage 1031, the second cache storage 1032, and the memory storage 104. However, currently, the processor 101 sends only the read request and the write request to the memory controller 102, and the memory controller 102 cannot sense the event executed by the processor 101. Therefore, the memory controller 102 cannot manage the cache storage 103 to improve utilization of the cache storage 103. For example, the memory controller 102 cannot efficiently migrate the data between the first cache storage 1031, the second cache storage 1032, and the memory storage 104, so that the utilization of the cache storage 103 is not high. To improve the utilization of the cache storage 103, the processor 101 and the memory controller 102 that are in the storage system 100 may manage the cache storage 103 by using any one of the following embodiments.

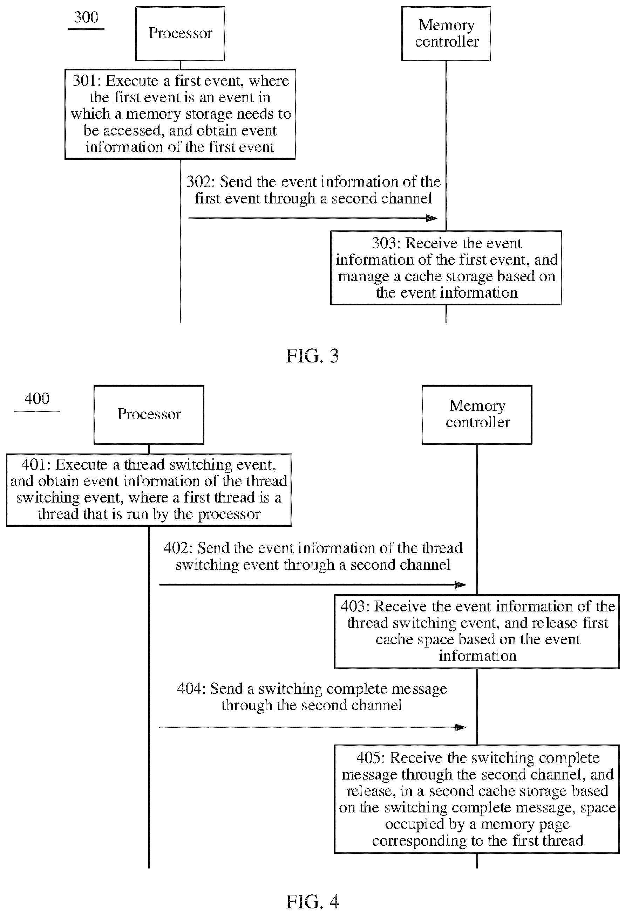

Refer to FIG. 3. An embodiment of this application provides a cache management method 300. The method 300 is applied to the storage system 100 shown in FIG. 1 or FIG. 2, and includes the following steps.

Step 301: A processor executes a first event, where the first event is an event in which a memory storage needs to be accessed, and obtains event information of the first event.

The first event includes one or more of the following: a thread switching event, a page table walk (page table walk, PTW) event, a cache line eviction (cache line eviction, CL Eviction) event, or the like. The thread switching event is used to switch a first thread from a running state to a preparation state, and the first thread is a thread that is currently run by the processor. The page table walk event is used to query a physical address of a data block that is in the memory storage and that is to be accessed by the processor. The cache line eviction event is used to evict a data block from a cache of the processor.

In some embodiments, the processor may run at least one thread, and the at least one thread includes the first thread. When running the first thread, the processor reads at least one data block of the first thread from the memory storage, and stores the at least one data block in the cache of the processor. In a process of running the first thread, the processor may further modify a part or all data blocks in the at least one data block, and mark a modified data block as a modified state.

When running the first thread, the processor may need to switch the running state of the first thread to the preparation state, and the processor starts to execute the thread switching event. In this case, the first event includes the thread switching event. The processor obtains the event information of the first event. The event information includes identification information of the first thread.

In some embodiments, a first cache storage caches a data block of the first thread. For ease of description, the data block is referred to as a first data block, and the first data block is read by a memory controller from the memory storage and cached in the first cache storage. When the processor runs the first thread, the memory controller reads the first data block and sends the first data block to the processor. The processor stores the first data block in the cache of the processor, to read the data block of the first thread from the memory storage.

In some embodiments, if the cache of the processor further includes a data block that is in a modified state and that belongs to the first thread, where for ease of description, the data block is referred to as a second data block, the event information of the first event further includes a physical address, in the memory storage, of the second data block.

In some embodiments, the processor translates a virtual address and the physical address of the data block by using a multi-level page table, and the physical address is a physical address of the data block in the memory storage. The multi-level page table includes an address of at least one memory page, and a virtual address and a physical address that are of each data block included in each memory page. When the processor needs to access a data block that is in the memory storage, the processor executes the page table walk event, in other words, the first event includes the page table walk event.

When executing the page table walk event, the processor searches the multi-level page table for an address of a memory page in which a to-be-accessed data block is located. For ease of description, the memory page is referred to as a first memory page. When the processor obtains the address of the first memory page, the processor obtains the event information of the first event. The event information includes the address of the first memory page.

In some embodiments, for the data block stored in the cache of the processor, if the data block is modified by the processor, the processor further records attribute information of the data block. The attribute information indicates an accessing status of the data block. Because a capacity of the cache of the processor is limited, the processor may evict some data blocks from the cache of the processor. In this case, the processor executes the cache line eviction event, in other words, the first event includes the cache line eviction event. If the data block to be evicted by the processor is a data block marked as the modified state, the to-be-evicted data block is modified, and the event information that is of the first event and that is obtained by the processor includes attribute information of the to-be-evicted data block.

Step 302: The processor sends the event information of the first event to the memory controller through a second channel.

In a process of executing the first event, the processor may perform a memory read/write operation. In embodiments of this application, before performing the memory read/write operation, the processor usually first obtains the event information of the first event, and sends the event information of the first event to the memory controller through the second channel.

Step 303: The memory controller receives the event information of the first event, and manages a cache storage based on the event information.

In step 303, the memory controller manages, based on the event information, data cached in the cache storage. For example, the memory controller may efficiently migrate the data between the cache storage and the memory storage. For event information of different first events, the memory controller performs different management on the data cached in the cache storage. In subsequent content, the different first events are listed, and a process in which the memory controller manages the cache storage is described in detail. Details are not described herein.

In embodiments of this application, because the processor obtains the event information of the first event when executing the first event, the processor sends the event information of the first event to the memory controller through the second channel. The memory controller receives the event information of the first event through the second channel. In this way, the memory controller can sense, based on the event information of the first event, the first event executed by the processor, and manage the cache storage based on the event information of the first event, to improve utilization of the cache storage.

For the method 300 shown in FIG. 3, in this embodiment of this application, the method 300 is described in detail by using an example in which the first event is the thread switching event. Refer to FIG. 4. This example provides a cache management method 400, including the following steps.

Step 401: A processor executes a thread switching event, and obtains event information of the thread switching event, where the thread switching event is used to switch a first thread from a running state to a preparation state, and the first thread is a thread that is run by the processor.

The processor may run at least one thread. The processor may need to switch the running state of a thread in the at least one thread to the preparation state. For ease of description, the thread is referred to as the first thread in this embodiment of this application.

When the processor runs the first thread, to meet a data read/write rate of the processor, a memory controller may cache at least one data block of the first thread in a memory storage into a first cache storage in the memory controller. When the processor needs to read and write a data block of the first thread in a process of running the first thread, the memory controller reads the data block of the first thread from the first cache storage and sends the read data block to the processor, or the memory controller receives the data block that the processor needs to write, and writes the data block that the processor needs to write into the first cache storage. Because the first cache storage has a high read/write bandwidth and a low read/write delay, a high read/write speed of the processor is satisfied.

When the processor runs the first thread, the processor performs a memory read operation to read at least one piece of data of the first thread, and stores the at least one piece of data in a cache of the processor. In a process of running the first thread, the processor may modify a part or all data blocks in the at least one data block, or may not modify the at least one data block. After modifying a data block, the processor marks a state of the data block as a modified state.

In step 401, when the processor starts to switch the running state of the first thread to the preparation state, the processor obtains identification information of the first thread, to obtain event information of the thread switching event, where the event information includes the identification information of the first thread.

In some embodiments, if the processor further modifies the data block of the first thread when running the first thread, where for ease of description, the data block is referred to as a second data block, the processor further obtains a physical address of the second data block that is in the memory storage. The event information of the thread switching event further includes the physical address of the second data block. During implementation,
the processor queries the cache of the processor for the data block of the first thread. If there is a data block in the modified state in the data block of the first thread, and the data block in the modified state is a data block modified by the processor in a process of running the first thread, the data block in the modified state is used as the second data block, and the physical address of the second data block is obtained.

Step 402: The processor sends the event information of the thread switching event to the memory controller through a second channel.

In some embodiments, in the cache of the processor, if the data block of the first thread includes the data block in the modified state, in other words, includes the second data block, when the processor switches the running state of the first thread to the preparation state, the processor further sends a write request to the memory controller through a first channel. The write request includes the second data block. After the write request is sent, a state of the second data block is marked as an idle state. If the data block of the first thread further includes another data block other than the second data block, after the processor switches the running state of the first thread to the preparation state, the processor directly marks a state of the another data block as the idle state, in other words, the processor marks a state of each data block of the first thread as the idle state.

In some embodiments, in the cache of the processor, if there is no data block in the modified state in the data block of the first thread, the processor marks the state of each data block of the first thread as the idle state.

It should be noted that after the running state of the first thread is switched to the preparation state, the processor neither reads or writes the data block of the first thread nor processes the data block that is of the first thread and that is stored in the cache of the processor. Because a capacity of the cache of the processor is limited and precious, after the running state of the first thread is switched to the preparation state, storage space occupied by each data block of the first thread in the cache of the processor is released. In the cache of the processor, after the state of each data block of the first thread is marked as the idle state, the processor may directly store data in the storage space to overwrite the data block in the idle state. Therefore, after the state of each data block of the first thread is marked as the idle state, the storage space is released.

It should be noted that, if there is the second data block, because the second data block is a data block modified by the processor, the memory storage stores an original data block corresponding to the second data block. The original data block is an unmodified data block of the second data block. Therefore, before the processor releases the storage space, the processor updates the original data block in the memory storage to the second data block based on the write request.

The processor sends the write request to the memory controller through the first channel only after sending the event information of the thread switching event.

After receiving the event information, the memory controller manages a cache storage based on the event information. Optionally, the memory controller manages the cache storage according to the following step 403.

Step 403: The memory controller receives the event information of the thread switching event, and releases first storage space based on the event information, and the first cache storage includes the first storage space, where the first storage space is used to store the data block of the first thread.

After the first thread is switched to the preparation state, the processor does not perform a memory read/write operation on the data block of the first thread. Because the capacity of the first cache storage is limited and precious, the first storage space is released, and the first storage space is used to cache a data block of another thread that is run by the processor or a data block of a thread to be started by the processor, so that utilization of the first cache storage is improved.

In some embodiments, when the event information further includes the physical address of the second data block, the memory controller allocates second storage space in a second cache storage based on the identification information of the first thread and the physical address of the second data block.

In some embodiments, when receiving the event information, if the event information includes the physical address of the second data block, the memory controller first allocates the second storage space in the second cache storage, and releases the first storage space before the running state of the first thread is switched to the preparation state.

After the memory controller receives the event information, for a data block that belongs to the first thread and that needs to be written into a memory by the processor, the memory controller does not cache the data block in the first cache storage again.

In step 403, the event information of the thread switching event includes the identification information of the first thread, and the memory controller releases the first storage space by performing the following operations 4031 to 4034, where the operations 4031 to 4034 are shown as follows.

4031: The memory controller obtains a first data block from the first cache storage based on the identification information of the first thread, where the first data block is a data block of the first thread.

The first cache storage may cache the at least one data block of the first thread, and the first data block is one of the at least one data block. In the first cache storage, a part or all of the at least one data block may be modified by the processor, and a modified data block is marked as the modified state in the first cache storage. Alternatively, in the first cache storage, none of the at least one data block may be modified by the processor.

In some embodiments, when receiving the event information, the memory controller obtains, from the first cache storage based on an identifier of the first thread, a data block that is of the first thread and that is marked as the modified state, and sets a state of the obtained data block to an uncompleted state. The uncompleted state indicates that the memory controller has not written the obtained data block back into the memory storage, and correspondingly stores a correspondence between an address of the data block and the uncompleted state.

4032: The memory controller determines whether the first data block is modified; and if the first data block is modified, perform 4033, or if the first data block is not modified, perform 4034.

In 4032, the memory controller determines whether the first data block is marked as the modified state. If the first data block is marked as the modified state, the memory controller determines that the first data block is modified; or if the first data block is not marked as the modified state, the memory controller determines that the first data block is not modified.

In some embodiments, if the first data block is modified, the memory controller queries, based on a physical address of the first data block, an uncompleted state corresponding to the first data block from the correspondence between the physical address and the uncompleted state, and performs step 4033.

4033: The memory controller writes the first data block into a third cache storage or the memory storage.

In 4033, the second cache storage may cache an original data block corresponding to the first data block, or may not cache an original data block corresponding to the first data block. The memory storage stores the original data block corresponding to the first data block, and the original data block is an unmodified data block of the first data block. If the second cache storage caches the original data block corresponding to the first data block, the memory controller updates the original data block in the second cache storage to the first data block. If the second cache storage does not cache the original data block corresponding to the first data block, the memory controller obtains, from the first cache storage, a memory page in which the first data block is located, and updates a memory page in which the original data block is located in the memory storage to the obtained memory page.

In some embodiments, the memory controller deletes, from the correspondence between the physical address and the uncompleted state, a record that includes the physical address of the first data block and the uncompleted state.

4034: The memory controller marks a state of the first storage space in which the first data block is located as the idle state.

For each data block of the first data block cached in the first cache storage, operations 4032 to 4034 are performed on each data block, to release, in the first cache storage, storage space occupied by each data block of the first thread.

In some embodiments, if the processor obtains the second data block, in a process of switching the running state of the first thread to the preparation state, the processor sends the write request to the memory controller through the first channel. The write request includes the second data block and the physical address of the second data block. The memory controller receives the write request through the first channel, and stores the second data block in the second storage space in the second cache storage based on the physical address, of the second data block, included in the write request. In this case, the memory controller does not store the second data block in the first cache storage.

Because the second storage space has been allocated before the write request is received, after receiving the write request, the memory controller directly stores the second data block in the second storage space. This improves data writing efficiency.

Step 404: After switching the running state of the first thread to the preparation state, the processor sends a switching complete message to the memory controller through the second channel, where the switching complete message indicates the processor to switch the running state of the first thread to the preparation state.

It should be noted that when the processor completes switching the running state of the first thread to the preparation state, the memory controller writes a modified data block that belongs to the first thread and that is in the first cache storage into the second cache storage, and also writes a modified data block that belongs to the first thread and that is in the cache of the processor into the second cache storage.

In some embodiments, after writing a data block into the second cache storage, the memory controller marks a memory page in which the data block is located as the modified state.

Step 405: The memory controller receives the switching complete message through the second channel, and releases, in the second cache storage based on the switching complete message, space occupied by a memory page corresponding to the first thread.

In step 405, the memory controller obtains, from the second cache storage based on the switching completion message, memory pages belonging to the first thread. A memory page marked as the modified state and a memory page not marked as the modified state are selected from the memory pages of the first thread. The memory page in the modified state is stored in the memory storage, the memory page in the modified state is marked as the idle state, and the memory page not marked as the modified state is marked as the idle state, so that the space occupied by the memory page corresponding to the first thread is released in the second cache storage.

In embodiments of this application, the processor switches the running state of the first thread to the preparation state by executing the thread switching event, and obtains the event information of the thread switching event. The event information includes the identification information of the first thread, and the event information is sent to the memory controller through the second channel. The memory controller releases, based on the identification information, the storage space occupied by the data block of the first thread in the first cache storage. In this way, the storage space may be used to store a data block of a thread that is run by the processor or a data block of a thread to be started. This improves the utilization of the first cache storage. In addition, the event information may further include the physical address of the second data block. The second data block is a data block that is stored in the cache of the processor and that belongs to the first thread, and the second data block is modified. The memory controller allocates the second storage space in the second cache storage based on the event information. In this way, the memory controller receives the write request sent by the processor. The write request includes the second data block, and directly stores the second data block in the second storage space, to improve data writing efficiency, so that utilization of the second cache storage is improved.

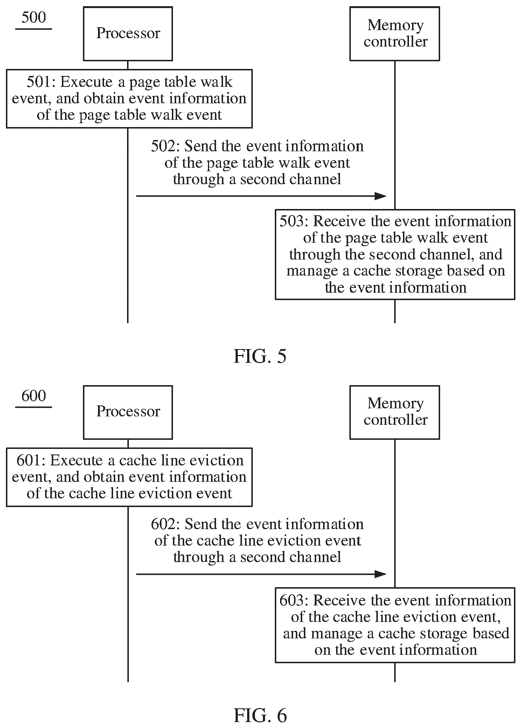

For the method 300 shown in FIG. 3, in this embodiment of this application, the method 300 is described in detail by using an example in which the first event is a page table walk event. Refer to FIG. 5. This example provides a cache management method 500, including the following steps.

Step 501: A processor executes a page table walk event, and obtains event information of the page table walk event, where the page table walk event is used to query a physical address of a data block that is in a memory storage and that is to be accessed by the processor.

The processor includes a multi-level page table, and translates a virtual address and a physical address of a data block by using the multi-level page table. The physical address is a physical address of the data block in the memory storage. The multi-level page table includes a page table corresponding to a memory page. The page table includes an address of the memory page, and a correspondence between a virtual address and a physical address that are of each data block included in the memory page.

When the processor needs to access the to-be-accessed data block, the processor searches, based on a sequence number of a page table corresponding to the to-be-accessed data block, the multi-level page table for the page table corresponding to the to-be-accessed data block. The page table includes an address of a memory page in which the to-be-accessed data block is located, and obtains, based on a virtual address of the to-be-accessed data block, the physical address of the to-be-accessed data block from a correspondence between a virtual address and a physical address that are of a data block included in the page table.

For ease of description, the memory page in which the to-be-accessed data block is located is referred to as a first memory page, and when the processor starts to search for the multi-level page table, it indicates that the processor starts to execute the page table walk event. When the processor obtains an address of the first memory page, the processor obtains the event information of the page table walk event. The event information includes the address of the first memory page.

After finding the physical address of the to-be-accessed data block, the processor may send a read request to a memory controller through a first channel. The read request includes the physical address of the to-be-accessed data block.

Step 502: The processor sends the event information of the page table walk event to the memory controller through a second channel.

Before sending the read request to the memory controller, the processor sends the event information of the page table walk event to the memory controller through the second channel.

In some embodiments, when obtaining the event information of the page table walk event, the processor sends the event information of the page table walk event to the memory controller. In this way, it is ensured that the processor sends the event information of the page table walk event to the memory controller before sending the read request to the memory controller.

Step 503: The memory controller receives the event information of the page table walk event through the second channel, and manages a cache storage based on the event information.

In step 503, the memory controller receives the event information of the page table walk event through the second channel. The event information includes the address of the first memory page, and caches, based on the address of the first memory page, data included in the first memory page stored in the memory storage into a second cache storage.

The first memory page includes the to-be-accessed data block. Therefore, when receiving the read request sent by the processor, the memory controller reads the to-be-accessed data block from the second cache storage based on the physical address that is of the to-be-accessed data block and that is included in the read request, and sends the read data block to the processor through the first channel.

A process of reading the first memory page from the memory storage usually takes a period of time. In the process of reading the first memory page, the memory controller selects a memory page from the second cache storage, and releases storage space occupied by the memory page. After the first memory page is read, the data included in the first memory page is cached into the released storage space.

In some embodiments, the memory controller selects, from the second cache storage, a memory page that is least recently accessed. If the selected memory page is not modified, the selected memory page is marked as an idle state, to release storage space occupied by the selected memory page. If the selected memory page is modified, the selected memory page is stored in the memory storage, and the selected memory page is marked as the idle state, to release the storage space occupied by the selected memory page.

In this embodiment of this application, the processor obtains, by executing the page table walk event, the address of the first memory page in which the to-be-accessed data block is located, to obtain the event information of the page table walk event. The event information includes the address of the first memory page, and the event information is sent to the memory controller through the second channel. The memory controller caches, in the second cache storage based on the address of the first memory page, the data included in the first memory page that is in the memory storage. In this way, when receiving the read request used to read the to-be-accessed data block, the memory controller directly reads the to-be-accessed data block from the second cache storage and sends the read data block to the processor. This improves reading efficiency and improves utilization of the second cache storage.

For the method 300 shown in FIG. 3, in this embodiment of this application, the method 300 is described in detail by using an example in which the first event is a cache line eviction event. Refer to FIG. 6. This example provides a cache management method 600, including the following steps.

Step 601: A processor executes a cache line eviction event, and obtains event information of the cache line eviction event, where the cache line eviction event is used to evict a data block from a cache of the processor.

For a data block stored in the cache of the processor, if the data block is modified by the processor, the processor further records attribute information of the data block. The attribute information indicates an accessing status of the data block. Optionally, the attribute information includes least recently used (least recently used, LRU) information and the like. For example, the LRU information is a quantity of times that the data block is accessed and/or a time length from last recent access to the data block to current time.

Because a capacity of the cache of the processor is limited, the processor may evict some data blocks from the cache of the processor. In this case, the processor executes the cache line eviction event. If a to-be-evicted data block of the processor is a data block marked as a modified state, the processor obtains the event information of the cache line eviction event, where the event information includes attribute information of the to-be-evicted data block.

If the to-be-evicted data block of the processor is not a data block marked as a modified state, it indicates that the to-be-evicted data block is not modified. The event information of the cache line eviction event does not need to be obtained, and the to-be-evicted data block is directly marked as an idle state, to evict the to-be-evicted data block.

Step 602: The processor sends the event information of the cache line eviction event to a memory controller through a second channel.

The processor sends a write request to the memory controller through a first channel, and the write request includes the to-be-evicted data block.

If the to-be-evicted data block is modified, the processor further needs to perform a memory write operation to write the to-be-evicted data block into a memory storage. In other words, the processor further needs to send the write request to the memory controller through the first channel, and the write request includes the to-be-evicted data block.

In some embodiments, the processor may first send the event information of the cache line eviction event, and then send the write request. Alternatively, the processor simultaneously sends the event information of the cache line eviction event and the write request. Alternatively, the processor first sends the write request, and then sends the event information of the cache line eviction event.

Step 603: The memory controller receives the event information of the cache line eviction event, and manages a cache storage based on the event information.

In step 603, the memory controller receives the event information of the cache line eviction event, and manages a first cache storage in the cache storage based on the event information. Optionally, during implementation,
the memory controller receives the event information of the cache line eviction event, and receives the write request, where the event information includes the attribute information of the to-be-evicted data block, and the write request includes the to-be-evicted data block; and a correspondence between the attribute information and the to-be-evicted data block is stored in the cache storage. Optionally, the correspondence between the attribute information and the to-be-evicted data block is stored in the first cache storage in the cache storage.

In some embodiments, the first cache storage may not have sufficient space to store the correspondence between the to-be-evicted data block and the attribute information. Therefore, the memory controller may first select a data block based on attribute information of each data block in the first cache storage, release storage space of the selected data block, and then store the correspondence between the attribute information and the to-be-evicted data block in the first cache storage in the cache storage.

In some embodiments, the memory controller first selects, based on the attribute information of each data block in the first cache storage, a data block that is least recently accessed. A second cache storage may include an original data block corresponding to the selected data block, or may not include an original data block corresponding to the selected data block, but the memory storage includes the original data block corresponding to the selected data block. If the second cache storage includes the original data block corresponding to the selected data block, the original data block in the second cache storage is updated to the selected data block. If the second cache storage does not include the original data block corresponding to the selected data block, the original data block in the memory storage is updated to the selected data block. Then, the selected data block is marked as the idle state in the first cache storage, to release storage space of the selected data block.

In embodiments of this application, the processor performs the cache line eviction event to evict the to-be-evicted data block, obtains the attribute information of the to-be-evicted data block, and obtains the event information of the cache line eviction event. The event information includes the attribute information of the to-be-evicted data block, and the event information is sent to the memory controller through the second channel. The memory controller correspondingly stores, in the first cache storage, the to-be-evicted data block and the attribute information. In this way, the attribute information of the to-be-evicted data block stored in the first cache storage is the same as attribute information of the to-be-evicted data block stored in the cache of the processor, and an LRU operation performed by the memory controller based on the attribute information of the data block is the same as an LRU operation performed by the processor based on the attribute information of the data block. This can improve utilization of the first cache storage.

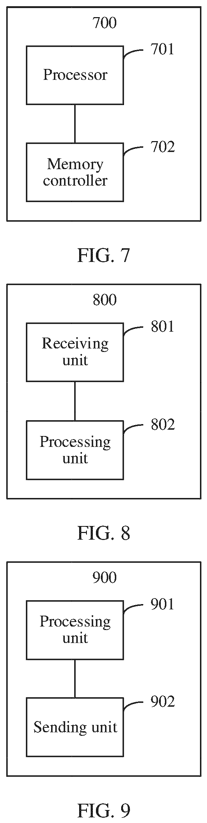

Refer to FIG. 7. An embodiment of this application provides a processor system 700. The system 700 includes a processor 701 and a memory controller 702. The processor 701 and the memory controller 702 are connected through a first channel and a second channel. The first channel is used to perform a memory read/write operation, and the second channel is used to transmit event information corresponding to the memory read/write operation.

In some embodiments, the processor 701 is the processor 101 in the storage system 100 shown in FIG. 1 or FIG. 2, the processor in the method 300 shown in FIG. 3, the processor in the method 400 shown in FIG. 4, the processor in the method 500 shown in FIG. 5, or the processor in the method 600 shown in FIG. 6. The memory controller 302 is the memory controller 102 in the storage system 100 shown in FIG. 1 or FIG. 2, the memory controller in the method 300 shown in FIG. 3, the memory controller in the method 400 shown in FIG. 4, the memory controller in the method 500 shown in FIG. 5, or the memory controller in the method 600 shown in FIG. 6.

The processor 701 is configured to send event information of a first event to the memory controller 702 through the second channel, and the first event is an event that is executed by the processor 701 and in which a memory storage needs to be accessed.

The memory controller 702 is configured to manage a cache storage based on the event information, and the cache storage is configured to cache a part of data that is in the memory storage.

Optionally, for a detailed implementation process of sending the event information by the processor 701, refer to related content in step 302 of the method 300 shown in FIG. 3, related content in step 402 of the method 400 shown in FIG. 4, related content in step 502 of the method 500 shown in FIG. 5, or related content in step 602 of the method 600 shown in FIG. 6. Details are not described herein again.

Optionally, for a detailed implementation process of managing the cache storage by the memory controller 702, refer to related content in step 303 of the method 300 shown in FIG. 3, related content in step 403 of the method 400 shown in FIG. 4, related content in step 503 of the method 500 shown in FIG. 5, or related content in step 603 of the method 600 shown in FIG. 6. Details are not described herein again.

Optionally, the first event includes one or more of the following: a thread switching event, a page table walk event, or a cache line eviction event, where the thread switching event is used to switch a first thread from a running state to a preparation state, the first thread is a thread that is run by the processor, the page table walk event is used to query a physical address of a data block that is in the memory storage and that is to be accessed by the processor, and the cache line eviction event is used to evict a data block from a cache of the processor.

Optionally, the first event includes the thread switching event, and the event information includes identification information of the first thread.

Optionally, the cache storage includes a first cache storage and a second cache storage, and the first cache storage is configured to cache a part of data that is in the second cache storage.

The memory controller 702 is configured to release first storage space based on the identification information, the first cache storage includes the first storage space, and the first storage space is used to store a data block of the first thread.

Optionally, for a detailed implementation process of releasing the first storage space by the memory controller 702, refer to related content in steps 4031 to 4034 of the method 400 shown in FIG. 4. Details are not described herein again.

Optionally, the memory controller includes the first cache storage, and the memory controller is connected to the second cache storage through a bus.

Optionally, the memory controller 702 is configured to:
obtain, based on the identification information, a first data block stored in the first cache storage, and the first data block is a data block of the first thread;
when the first data block is modified, store the first data block in the second cache storage or the memory storage; and
mark a state of the first storage space in which the first data block is located as an idle state.

Optionally, for a detailed implementation process of obtaining the first data block by the memory controller 702, refer to related content in 4031 of the method 400 shown in FIG. 4. Details are not described herein again.

Optionally, for a detailed implementation process of storing the first data block in the second cache storage or the memory storage by the memory controller 702, refer to related content in 4033 of the method 400 shown in FIG. 4. Details are not described herein again.

Optionally, for a detailed implementation process of marking the state of the first storage space as the idle state by the memory controller 702, refer to related content in 4034 of the method 400 shown in FIG. 4. Details are not described herein again.

Optionally, the event information further includes a physical address of a second data block that is in the memory storage, the cache of the processor 701 includes the second data block, the second data block is modified, and the second data block is a data block of the first thread.

The memory controller 702 is further configured to allocate second storage space in the second cache storage based on the identification information and the physical address of the second data block, and the second storage space is used to store the second data block.

Optionally, for a detailed implementation process of allocating the second storage space by the memory controller 702, refer to related content in 403 of the method 400 shown in FIG. 4. Details are not described herein again.

Optionally, the first event includes the page table walk event, the event information includes an address of a first memory page, and the first memory page is a memory page in which the to-be-accessed data block is located.

Optionally, the memory controller 702 is configured to read, from the memory storage, data included in the first memory page, and store, in the cache storage, the data included in the first memory page.

Optionally, for a detailed implementation process of reading the data included in the first memory page, and storing the data included in the first memory page in the cache storage by the memory controller 702, refer to related content in step 503 in the method 500 shown in FIG. 5. Details are not described herein again.

Optionally, the first event includes the cache line eviction event, the event information includes attribute information of the data block to be evicted by the processor 701, and the attribute information indicates an accessing status of the to-be-evicted data block.

Optionally, the memory controller 702 is further configured to: receive a write request sent by the processor 701, and the write request includes the to-be-evicted data block; and store, in the cache storage, a correspondence between the to-be-evicted data block and the attribute information.

Optionally, for a detailed implementation process of storing the correspondence between the to-be-evicted data block and the attribute information in the cache storage by the memory controller 702, refer to related content in step 603 in the method 600 shown in FIG. 6. Details are not described herein again.

In embodiments of this application, because the processor obtains the event information of the first event when executing the first event, the processor sends the event information of the first event to the memory controller through the second channel. The memory controller receives the event information of the first event through the second channel. In this way, the memory controller can sense, based on the event information of the first event, the first event executed by the processor, and manage the cache storage based on the event information of the first event, to improve utilization of the cache storage.

Refer to FIG. 8. An embodiment of this application provides a cache management apparatus 800. The apparatus 800 is used in a processor system, including a processor and the apparatus 800. The processor and the apparatus 800 are connected through a first channel and a second channel. The first channel is used to perform a memory read/write operation, and the second channel is used to transmit event information corresponding to the memory read/write operation.

The apparatus 800 is deployed on the memory controller 102 in the storage system 100 shown in FIG. 1 or FIG. 2, the memory controller in the method 300 shown in FIG. 3, the memory controller in the method 400 shown in FIG. 4, the memory controller in the method 500 shown in FIG. 5, or the memory controller in the method 600 shown in FIG. 6. The apparatus 800 includes:
a receiving unit 801, configured to receive, through the second channel, event information that is of a first event and that is sent by the processor, where the first event is an event that is executed by the processor and in which a memory storage needs to be accessed; and
a processing unit 802, configured to manage a cache storage based on the event information, where the cache storage is configured to cache a part of data that is in the memory storage.

Optionally, for a detailed implementation process of managing the cache storage by the processing unit 802, refer to related content in step 303 of the method 300 shown in FIG. 3, related content in step 403 of the method 400 shown in FIG. 4, related content in step 503 of the method 500 shown in FIG. 5, or related content in step 603 of the method 600 shown in FIG. 6. Details are not described herein again.

Optionally, the first event includes one or more of the following: a thread switching event, a page table walk event, or a cache line eviction event, where the thread switching event is used to switch a first thread from a running state to a preparation state, the first thread is a thread that is run by the processor, the page table walk event is used to query a physical address of a data block that is in the memory storage and that is to be accessed by the processor, and the cache line eviction event is used to evict a data block from a cache of the processor.

Optionally, the first event includes the thread switching event, and the event information includes identification information of the first thread.

Optionally, the cache storage includes a first cache storage and a second cache storage, and the first cache storage is configured to cache a part of data that is in the second cache storage.

The processing unit 802 is configured to release first storage space based on the identification information, the first cache storage includes the first storage space, and the first storage space is used to store a data block of the first thread.

Optionally, for a detailed implementation process of releasing the first storage space by the processing unit 802, refer to related content in steps 4031 to 4034 of the method 400 shown in FIG. 4. Details are not described herein again.

Optionally, the apparatus 800 includes the first cache storage, and the apparatus 800 is connected to the second cache storage through a bus.

Optionally, the event information further includes a physical address of a second data block that is in the memory storage, the cache of the processor includes the second data block, the second data block is modified, and the second data block is a data block of the first thread.

The processing unit 802 is further configured to allocate second storage space in the second cache storage based on the identification information and the physical address of the second data block, and the second storage space is used to store the second data block.

Optionally, for a detailed implementation process of allocating the second storage space by the processing unit 802, refer to related content in 403 of the method 400 shown in FIG. 4. Details are not described herein again.

Optionally, the first event includes the page table walk event, the event information includes an address of a first memory page, and the first memory page is a memory page in which the to-be-accessed data block is located.

Optionally, the processing unit 802 is configured to read, from the memory storage, data included in the first memory page, and store, in the cache storage, the data included in the first memory page.

Optionally, for a detailed implementation process of reading the data included in the first memory page, and storing the data included in the first memory page in the cache storage by the processing unit 802, refer to related content in step 503 in the method 500 shown in FIG. 5. Details are not described herein again.

Optionally, the first event includes the cache line eviction event, the event information includes attribute information of the data block to be evicted by the processor, and the attribute information indicates an accessing status of the to-be-evicted data block.

Optionally, the receiving unit 801 is further configured to receive a write request sent by the processor, where the write request includes the to-be-evicted data block.

The processing unit 802 is configured to store, in the cache storage, a correspondence between the to-be-evicted data block and the attribute information.

Optionally, for a detailed implementation process of storing the correspondence between the to-be-evicted data block and the attribute information in the cache storage by the processing unit 802, refer to related content in step 603 in the method 600 shown in FIG. 6. Details are not described herein again.

In embodiments of this application, because the processor obtains the event information of the first event when executing the first event, the processor sends the event information of the first event to the apparatus through the second channel. The receiving unit receives the event information of the first event through the second channel. In this way, the processing unit can sense, based on the event information of the first event, the first event executed by the processor, and manage the cache storage based on the event information of the first event, to improve utilization of the cache storage.

Refer to FIG. 9. An embodiment of this application provides a cache management apparatus 900. The apparatus 900 is used in a processor system, including the apparatus 900 and the memory controller. The apparatus 900 and the memory controller are connected through a first channel and a second channel. The first channel is used to perform a memory read/write operation, and the second channel is used to transmit event information corresponding to the memory read/write operation.

The apparatus 900 is deployed on the processor 101 in the storage system 100 shown in FIG. 1 or FIG. 2, the processor in the method 300 shown in FIG. 3, the processor in the method 400 shown in FIG. 4, the processor in the method 500 shown in FIG. 5, or the processor in the method 600 shown in FIG. 6. The apparatus 900 includes:
a processing unit 901, configured to execute a first event, the first event is an event in which a memory storage needs to be accessed; and
a sending unit 902, configured to send the event information of the first event to the memory controller through the second channel.

Optionally, for a detailed implementation process of performing the first event by the processing unit 901, refer to related content in step 301 of the method 300 shown in FIG. 3, related content in step 401 of the method 400 shown in FIG. 4, related content in step 501 of the method 500 shown in FIG. 5, or related content in step 601 of the method 600 shown in FIG. 6. Details are not described herein again.

Optionally, for a detailed implementation process of sending the event information by sending unit 902, refer to related content in step 302 of the method 300 shown in FIG. 3, related content in step 402 of the method 400 shown in FIG. 4, related content in step 502 of the method 500 shown in FIG. 5, or related content in step 602 of the method 600 shown in FIG. 6. Details are not described herein again.

Optionally, the first event includes one or more of the following: a thread switching event, a page table walk event, or a cache line eviction event, where the thread switching event is used to switch a first thread from a running state to a preparation state, the first thread is a thread that is run by the apparatus 900, the page table walk event is used to query a physical address of a data block that is in the memory storage and that is to be accessed by the apparatus 900, and the cache line eviction event is used to evict a data block from a cache of the apparatus 900.

Optionally, the first event includes the thread switching event, and the event information includes identification information of the first thread.

Optionally, the first event includes the page table walk event, the event information includes an address of a first memory page, and the first memory page is a memory page in which the to-be-accessed data block is located.

Optionally, the first event includes the cache line eviction event, the event information includes attribute information of the data block to be evicted by the apparatus 900, and the attribute information indicates an accessing status of the to-be-evicted data block.

In embodiments of this application, because the processing unit obtains the event information of the first event when executing the first event, the sending unit sends the event information of the first event to the memory controller through the second channel. In this way, the memory controller can sense, based on the event information of the first event, the first event executed by the processor, and manage the cache storage based on the event information of the first event, to improve utilization of the cache storage.

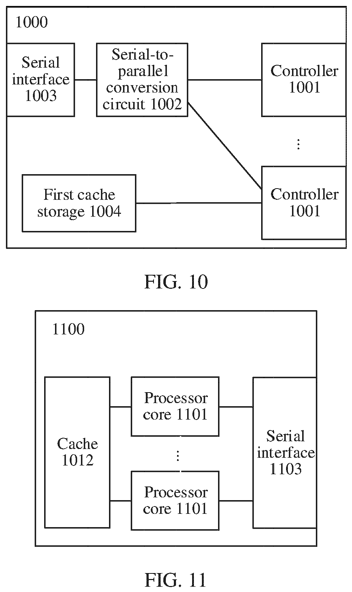

FIG. 10 is a schematic diagram of a memory controller 1000 according to an embodiment of this application. The memory controller 1000 is the memory controller 102 in the embodiment shown in FIG. 1 or FIG. 2, or the memory controller 1000 is the memory controller in the method 300 shown in FIG. 3, the method 400 shown in FIG. 4, the method 500 shown in FIG. 5, or the method 600 shown in FIG. 6. The memory controller 1000 includes at least one controller 1001, a serial-to-parallel conversion circuit 1002, a serial interface 1003, and a first cache storage 1004. The serial-to-parallel conversion circuit 1002 is separately connected to the at least one controller 1001 and the serial interface 1003, and the first cache storage 1004 is connected to a part or all of the at least one controller 1001.

The memory controller 1000 is an apparatus of a hardware structure, and may be configured to implement functional modules in the apparatus 800 shown in FIG. 8. For example, a person skilled in the art may figure out that the processing unit 802 in the apparatus 800 shown in FIG. 8 may be implemented by using the at least one controller 1001. The receiving unit 801 in the apparatus 800 shown in FIG. 8 may be implemented through the serial interface 1003.

The serial-to-parallel conversion circuit 1002 is configured to: convert serial information received by the serial interface 1003 into parallel information, and send the parallel information to a part or all of the at least one controller 1001; or convert parallel information from the controller 1001 into serial information, and send the serial information to the serial interface 1003.

The at least one controller 1001 may manage the first cache storage 1004. For example, the at least one controller 1001 may read and write the first cache storage 1004.

Optionally, the memory controller 1000 may be further configured to implement a function of the memory controller in any one of the foregoing embodiments.

Optionally, the memory controller 1000 further includes a memory (not shown in FIG. 10). The memory is configured to store application program code for executing the solutions of this application, and the at least one controller 1001 controls execution. The at least one controller 1001 is configured to execute the application program code stored in the memory, and cooperate with the serial-to-parallel conversion circuit 1002 and the serial interface 1003, so that the memory controller 1000 implements a function in the method in this patent.

FIG. 11 is a schematic diagram of a processor 1100 according to an embodiment of this application. The processor 1100 is the processor 101 in the embodiment shown in FIG. 1 or FIG. 2, or the processor 1100 is the processor in the method 300 shown in FIG. 3, the method 400 shown in FIG. 4, the method 500 shown in FIG. 5, or the method 600 shown in FIG. 6. The processor 1100 includes at least one processor core 1101, a cache 1102, and a serial interface 1103. The at least one processor core 1101 is separately connected to the cache 1102 and the serial interface 1103.

The processor 1100 is an apparatus of a hardware structure, and may be configured to implement functional modules in the apparatus 900 shown in FIG. 9. For example, a person skilled in the art may figure out that the processing unit 901 in the apparatus 900 shown in FIG. 9 may be implemented by using the at least one processor core 1101. The sending unit 902 in the apparatus 900 shown in FIG. 9 may be implemented through the serial interface 1103.

Optionally, the processor 1100 may be further configured to implement a function of the processor in any one of the foregoing embodiments.

Optionally, the processor 1100 further includes a memory (not shown in FIG. 11). The memory is configured to store application program code for executing the solutions of this application, and the at least one processor core 1101 controls execution. The at least one processor core 1101 is configured to execute the application program code stored in the memory, and cooperate with the serial interface 1103, so that the processor 1100 implements a function in the method in this patent.

It should be understood that the processor provided in any one of the foregoing embodiments may be a central processing unit (Central Processing Unit, CPU), another general purpose processor, a digital signal processor (digital signal processor, DSP), an application specific integrated circuit (application specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, any conventional processor, or the like. It should be noted that the processor may be a processor that supports an advanced RISC machines (advanced RISC machines, ARM) architecture.

Further, in an optional embodiment, the storage medium (for example, a cache of the processor, a memory storage, or a cache storage) disclosed in any one of the foregoing embodiments may include a read-only storage medium and a random storage medium, and provide instructions and data for the processor. The storage medium may further include a non-volatile random access storage medium. For example, the storage medium may further store information about a storage device type.

The storage medium may be a volatile storage medium or a non-volatile storage medium, or may include both a volatile storage medium and a non-volatile storage medium. The non-volatile storage medium may be a phase change memory (phase change memory, PCM), a read-only storage medium (read-only memory, ROM), a programmable read-only storage medium (programmable ROM, PROM), an erasable programmable read-only storage medium (erasable PROM, EPROM), an electrically erasable programmable read-only storage medium (electrically EPROM, EEPROM), or a flash memory. The volatile storage medium may be a random access storage medium (random access memory, RAM) used as an external cache. By way of example, and not limitation, many forms of RAMs are available. For example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk Solid State Disk), or the like.

The foregoing descriptions are only optional embodiments of this application, but are not intended to limit this application. Any modification, equivalent replacement, or improvement made within the principle of this application should fall within the protection scope of this application.

## Claims

1. A processor system, wherein the system comprises a processor and a memory controller, wherein the processor and the memory controller are connected through a first channel and a second channel, the first channel is used to perform a memory read/write operation, and the second channel is used to transmit event information corresponding to the memory read/write operation;
the processor is configured to send event information of a first event to the memory controller through the second channel, and the first event is an event that is executed by the processor and in which a memory storage needs to be accessed; and
the memory controller is configured to manage a cache storage based on the event information, and the cache storage is configured to cache a part of data that is in the memory storage.

2. The system according to claim 1, wherein the first event comprises one or more of the following: a thread switching event, a page table walk event, or a cache line eviction event, wherein the thread switching event is used to switch a first thread from a running state to a preparation state, the first thread is a thread that is run by the processor, the page table walk event is used to query a physical address of a data block that is in the memory storage and that is to be accessed by the processor, and the cache line eviction event is used to evict a data block from a cache of the processor.

3. The system according to claim 2, wherein the first event comprises the thread switching event, and the event information comprises identification information of the first thread.

4. The system according to claim 3, wherein the cache storage comprises a first cache storage and a second cache storage, and the first cache storage is configured to cache a part of data that is in the second cache storage; and
the memory controller is configured to release first storage space based on the identification information, the first cache storage comprises the first storage space, and the first storage space is used to store a data block of the first thread.

5. The system according to claim 4, wherein the memory controller comprises the first cache storage, and the memory controller is connected to the second cache storage through a bus.

6. The system according to claim 4 or 5, wherein the memory controller is configured to:
obtain, based on the identification information, a first data block stored in the first cache storage, and the first data block is a data block of the first thread;
when the first data block is modified, store the first data block in the second cache storage or the memory storage; and
mark a state of the first storage space in which the first data block is located as an idle state,
wherein after the state of the first storage space is marked as the idle state, the first storage space is released.

7. The system according to any one of claims 4 to 6, wherein the event information further comprises a physical address of a second data block that is in the memory storage, the cache of the processor comprises the second data block, the second data block is modified, and the second data block is a data block of the first thread; and
the memory controller is further configured to allocate second storage space in the second cache storage based on the identification information and the physical address of the second data block, and the second storage space is used to store the second data block.

8. The system according to any one of claims 2 to 7, wherein the first event comprises the page table walk event, the event information comprises an address of a first memory page, and the first memory page is a memory page in which the to-be-accessed data block is located.

9. The system according to claim 8, wherein the memory controller is configured to: read, from the memory storage, data comprised in the first memory page, and store, in the cache storage, the data comprised in the first memory page.

10. The system according to any one of claims 2 to 9, wherein the first event comprises the cache line eviction event, the event information comprises attribute information of the data block to be evicted by the processor, and the attribute information indicates an accessing status of the to-be-evicted data block.

11. The system according to claim 10, wherein the memory controller is further configured to: receive a write request sent by the processor, and the write request comprises the to-be-evicted data block; and store, in the cache storage, a correspondence between the to-be-evicted data block and the attribute information.

12. A cache management method, wherein the method is applied to a processor system, the processor system comprises a processor and a memory controller, the processor and the memory controller are connected through a first channel and a second channel, the first channel is used to perform a memory read/write operation, the second channel is used to transmit event information corresponding to the memory read/write operation, and the method comprises:
receiving, by the memory controller through the second channel, event information that is of a first event and that is sent by the processor, wherein the first event is an event that is executed by the processor and in which a memory storage needs to be accessed; and
managing, by the memory controller, a cache storage based on the event information, wherein the cache storage is configured to cache a part of data that is in the memory storage.

13. The method according to claim 12, wherein the first event comprises one or more of the following: a thread switching event, a page table walk event, or a cache line eviction event, wherein the thread switching event is used to switch a first thread from a running state to a preparation state, the first thread is a thread that is run by the processor, the page table walk event is used to query a physical address of a data block that is in the memory storage and that is to be accessed by the processor, and the cache line eviction event is used to evict a data block from a cache of the processor.

14. The method according to claim 13, wherein the first event comprises the thread switching event, and the event information comprises identification information of the first thread.

15. The method according to claim 14, wherein the cache storage comprises a first cache storage and a second cache storage, and the first cache storage is configured to cache a part of data that is in the second cache storage; and
the managing, by the memory controller, a cache storage based on the event information comprises:
releasing, by the memory controller, first storage space based on the identification information, wherein the first cache storage comprises the first storage space, and the first storage space is used to store a data block of the first thread.

## Patentansprüche

1. Prozessorsystem, wobei das System einen Prozessor und eine Speichersteuerung umfasst, wobei der Prozessor und die Speichersteuerung über einen ersten Kanal und einen zweiten Kanal verbunden sind, der erste Kanal verwendet wird, um eine Speicher-Lese-/Schreiboperation durchzuführen, und der zweite Kanal verwendet wird, um Ereignisinformationen entsprechend der Speicher-Lese-/Schreiboperation zu übertragen; der Prozessor konfiguriert ist, um Ereignisinformationen eines ersten Ereignisses über den zweiten Kanal an die Speichersteuerung zu senden, und das erste Ereignis ein Ereignis ist, das durch den Prozessor ausgeführt wird und in dem auf einen Arbeitsspeicher zugegriffen werden muss; und
die Speichersteuerung konfiguriert ist, um eine Cache-Speicherung basierend auf den Ereignisinformationen zu verwalten, und die Cache-Speicherung konfiguriert ist, um einen Teil von Daten, die in dem Arbeitsspeicher sind, zu cachen.

2. System nach Anspruch 1, wobei das erste Ereignis eines oder mehrere der folgenden umfasst: ein Thread-Wechselereignis, ein Page-Table-Walk-Ereignis oder ein Cache-Line-Eviction-Ereignis, wobei das Thread-Wechselereignis verwendet wird, um einen ersten Thread von einem Betriebszustand in einen Vorbereitungszustand zu wechseln, der erste Thread ein Thread ist, der durch den Prozessor laufengelassen wird, das Page-Table-Walk-Ereignis verwendet wird, um eine physische Adresse eines Datenblocks, der in dem Arbeitsspeicher ist und auf den durch den Prozessor zugegriffen werden soll, abzufragen, und das Cache-Line-Eviction-Ereignis verwendet wird, um einen Datenblock aus einem Cache des Prozessors zu entfernen.

3. System nach Anspruch 2, wobei das erste Ereignis das Thread-Wechselereignis umfasst und die Ereignisinformationen Identifikationsinformationen des ersten Threads umfassen.

4. System nach Anspruch 3, wobei die Cache-Speicherung eine erste Cache-Speicherung und eine zweite Cache-Speicherung umfasst und die erste Cache-Speicherung konfiguriert ist, um einen Teil von Daten, die in der zweiten Cache-Speicherung sind, zu cachen; und
die Speichersteuerung konfiguriert ist, um den ersten Speicherungsplatz basierend auf den Identifikationsinformationen freizugeben, wobei die erste Cache-Speicherung den ersten Speicherungsplatz umfasst und der erste Speicherungsplatz verwendet wird, um einen Datenblock des ersten Threads zu speichern.

5. System nach Anspruch 4, wobei die Speichersteuerung die erste Cache-Speicherung umfasst und die Speichersteuerung mit der zweiten Cache-Speicherung über einen Bus verbunden ist.

6. System nach Anspruch 4 oder 5, wobei die Speichersteuerung konfiguriert ist zum:
Erhalten, basierend auf den Identifikationsinformationen, eines ersten Datenblocks, der in der ersten Cache-Speicherung gespeichert ist, und der erste Datenblock ein Datenblock des ersten Threads ist;
wenn der erste Datenblock modifiziert ist, Speichern des ersten Datenblocks in der zweiten Cache-Speicherung oder dem Arbeitsspeicher; und
Markieren eines Zustands des ersten Speicherungsplatzes, in dem sich der erste Datenblock befindet, als einen Ruhezustand,
wobei, nachdem der Zustand des ersten Speicherungsplatzes als der Ruhezustand markiert ist, der erste Speicherungsplatz freigegeben wird.

7. System nach einem der Ansprüche 4 bis 6, wobei die Ereignisinformationen ferner eine physische Adresse eines zweiten Datenblocks, der in dem Arbeitsspeicher ist, umfassen, der Cache des Prozessors den zweiten Datenblock umfasst, der zweite Datenblock modifiziert ist, und der zweite Datenblock ein Datenblock des ersten Threads ist; und die Speichersteuerung ferner konfiguriert ist, um einen zweiten Speicherungsplatz in der zweiten Cache-Speicherung basierend auf den Identifikationsinformationen und der physischen Adresse des zweiten Datenblocks zuzuweisen, und der zweite Speicherungsplatz verwendet wird, um den zweiten Datenblock zu speichern.

8. System nach einem der Ansprüche 2 bis 7, wobei das erste Ereignis das Page-Table-Walk-Ereignis umfasst, die Ereignisinformationen eine Adresse einer ersten Speicherseite umfassen, und die erste Speicherseite eine Speicherseite ist, in der sich der Datenblock, auf den zugegriffen werden soll, befindet.

9. System nach Anspruch 8, wobei die Speichersteuerung konfiguriert ist zum: Lesen, aus dem Arbeitsspeicher, von Daten, die in der ersten Speicherseite umfasst sind, und Speichern, in der Cache-Speicherung, der Daten, die in der ersten Speicherseite umfasst sind.

10. System nach einem der Ansprüche 2 bis 9, wobei das erste Ereignis das Cache-Line-Eviction-Ereignis umfasst, die Ereignisinformationen Attributinformationen des Datenblocks, der durch den Prozessor zu entfernen ist, umfassen, und die Attributinformationen einen Zugriffsstatus des Datenblocks, der zu entfernen ist, anzeigen.

11. System nach Anspruch 10, wobei die Speichersteuerung ferner konfiguriert ist zum:
Empfangen einer Schreibanforderung, die durch den Prozessor gesendet wird, und die Schreibanforderung den Datenblock, der zu entfernen ist, umfasst; und Speichern, in der Cache-Speicherung, einer Entsprechung zwischen dem Datenblock, der zu entfernen ist, und den Attributinformationen.

12. Cache-Verwaltungsverfahren, wobei das Verfahren auf ein Prozessorsystem angewendet wird, das Prozessorsystem einen Prozessor und eine Speichersteuerung umfasst, der Prozessor und die Speichersteuerung über einen ersten Kanal und einen zweiten Kanal verbunden sind, der erste Kanal verwendet wird, um eine Speicher-Lese-/Schreiboperation durchzuführen, der zweite Kanal verwendet wird, um Ereignisinformationen entsprechend der Speicher-Lese-/Schreiboperation zu übertragen, und das Verfahren umfasst:
Empfangen, durch die Speichersteuerung über den zweiten Kanal, von Ereignisinformationen, die von einem ersten Ereignis stammen und die durch den Prozessor gesendet werden, wobei das erste Ereignis ein Ereignis ist, das durch den Prozessor ausgeführt wird und in dem auf einen Arbeitsspeicher zugegriffen werden muss; und
Verwalten, durch die Speichersteuerung, einer Cache-Speicherung basierend auf den Ereignisinformationen, wobei die Cache-Speicherung konfiguriert ist, um einen Teil von Daten, die in dem Arbeitsspeicher sind, zu cachen.

13. Verfahren nach Anspruch 12, wobei das erste Ereignis eines oder mehrere der folgenden umfasst: ein Thread-Wechselereignis, ein Page-Table-Walk-Ereignis oder ein Cache-Line-Eviction-Ereignis, wobei das Thread-Wechselereignis verwendet wird, um einen ersten Thread von einem Betriebszustand in einen Vorbereitungszustand zu wechseln, der erste Thread ein Thread ist, der durch den Prozessor laufengelassen wird, das Page-Table-Walk-Ereignis verwendet wird, um eine physische Adresse eines Datenblocks, der in dem Arbeitsspeicher ist und auf den durch den Prozessor zugegriffen werden soll, abzufragen, und das Cache-Line-Eviction-Ereignis verwendet wird, um einen Datenblock aus einem Cache des Prozessors zu entfernen.

14. Verfahren nach Anspruch 13, wobei das erste Ereignis das Thread-Wechselereignis umfasst und die Ereignisinformationen Identifikationsinformationen des ersten Threads umfassen.

15. Verfahren nach Anspruch 14, wobei die Cache-Speicherung eine erste Cache-Speicherung und eine zweite Cache-Speicherung umfasst und die erste Cache-Speicherung konfiguriert ist, um einen Teil von Daten, die in der zweiten Cache-Speicherung sind, zu cachen; und
das Verwalten, durch die Speichersteuerung, einer Cache-Speicherung basierend auf den Ereignisinformationen umfasst:
Freigeben, durch die Speichersteuerung, eines ersten Speicherungsplatzes basierend auf den Identifikationsinformationen, wobei die erste Cache-Speicherung den ersten Speicherungsplatz umfasst und der erste Speicherungsplatz verwendet wird, um einen Datenblock des ersten Threads zu speichern.

## Revendications

1. Système de processeur, dans lequel le système comprend un processeur et un dispositif de commande de mémoire, dans lequel le processeur et le dispositif de commande de mémoire sont connectés par l'intermédiaire d'un premier canal et d'un second canal, le premier canal est utilisé pour effectuer une opération de lecture/écriture de mémoire, et le second canal est utilisé pour transmettre des informations d'événement correspondant à l'opération de lecture/écriture de mémoire ;
le processeur est configuré pour envoyer des informations d'événement d'un premier événement au dispositif de commande de mémoire par l'intermédiaire du second canal, et le premier événement est un événement qui est réalisé par le processeur et dans lequel il est nécessaire d'accéder à un stockage de mémoire ; et
le dispositif de commande de mémoire est configuré pour gérer une antémémoire sur la base des informations d'événement, et l'antémémoire est configurée pour mettre en cache une partie de données qui se trouve dans le stockage de mémoire.

2. Système selon la revendication 1, dans lequel le premier événement comprend un ou plusieurs parmi ce qui suit : un événement de commutation de fil, un événement de parcours de table de pages ou un événement d'éviction de ligne de cache, dans lequel l'événement de commutation de fil est utilisé pour commuter un premier fil d'un état d'exécution à un état de préparation, le premier fil est un fil qui est exécuté par le processeur, l'événement de parcours de table de pages est utilisé pour interroger une adresse physique d'un bloc de données qui se trouve dans le stockage de mémoire et auquel le processeur doit accéder, et l'événement d'éviction de ligne de cache est utilisé pour évincer un bloc de données d'un cache du processeur.

3. Système selon la revendication 2, dans lequel le premier événement comprend l'événement de commutation de fil, et les informations d'événement comprennent des informations d'identification du premier fil.

4. Système selon la revendication 3, dans lequel l'antémémoire comprend une première antémémoire et une seconde antémémoire, et la première antémémoire est configuré pour mettre en cache une partie de données qui se trouve dans la seconde antémémoire ; et
le dispositif de commande de mémoire est configuré pour libérer un premier espace de stockage sur la base des informations d'identification, la première antémémoire comprend le premier espace de stockage, et le premier espace de stockage est utilisé pour stocker un bloc de données du premier fil.

5. Système selon la revendication 4, dans lequel le dispositif de commande de mémoire comprend la première antémémoire, et le dispositif de commande de mémoire est connecté à la seconde antémémoire par l'intermédiaire d'un bus.

6. Système selon la revendication 4 ou 5, dans lequel le dispositif de commande de mémoire est en outre configuré pour :
obtenir, sur la base des informations d'identification, un premier bloc de données stocké dans la première antémémoire, et le premier bloc de données est un bloc de données du premier fil ;
lorsque le premier bloc de données est modifié, stocker le premier bloc de données dans la seconde antémémoire ou le stockage de mémoire ; et
marquer un état du premier espace de stockage dans lequel le premier bloc de données est situé en tant qu'état inactif,
dans lequel, après le marquage de l'état du premier espace de stockage en tant qu'état inactif, le premier espace de stockage est libéré.

7. Système selon l'une quelconque des revendications 4 à 6, dans lequel les informations d'événement comprennent en outre une adresse physique d'un second bloc de données qui se trouve dans le stockage de mémoire, le cache du processeur comprend le second bloc de données, le second bloc de données est modifié, et le second bloc de données est un bloc de données du premier fil ; et
le dispositif de commande de mémoire est en outre configuré pour attribuer un second espace de stockage dans la seconde antémémoire sur la base des informations d'identification et de l'adresse physique du second bloc de données, et le second espace de stockage est utilisé pour stocker le second bloc de données.

8. Système selon l'une quelconque des revendications 2 à 7, dans lequel le premier événement comprend l'événement de parcours de table de pages, les informations d'événement comprennent une adresse d'une première page de mémoire, et la première page de mémoire est une page de mémoire dans laquelle le bloc de données à accéder est situé.

9. Système selon la revendication 8, dans lequel le dispositif de commande de mémoire est configuré pour : lire, à partir du stockage de mémoire, des données comprises dans la première page de mémoire, et stocker, dans l'antémémoire, les données comprises dans la première page de mémoire.

10. Système selon l'une quelconque des revendications 2 à 9, dans lequel le premier événement comprend l'événement d'éviction de ligne de cache, les informations d'événements comprennent des informations d'attribut du bloc de données à évincer par le processeur, et les informations d'attribut indiquent un état d'accès du bloc de données à évincer.

11. Système selon la revendication 10, dans lequel le dispositif de commande de mémoire est en outre configuré pour : recevoir une demande d'écriture envoyée par le processeur, et la demande d'écriture comprend le bloc de données à évincer ; et
stocker, dans l'antémémoire, une correspondance entre le bloc de données à évincer et les informations d'attribut.

12. Procédé de gestion de cache, dans lequel le procédé est appliqué à un système de processeur, le système de processeur comprend un processeur et un dispositif de commande de mémoire, le processeur et le dispositif de commande de mémoire sont connectés par l'intermédiaire d'un premier canal et d'un second canal, le premier canal est utilisé pour effectuer une opération de lecture/écriture de mémoire, le second canal est utilisé pour transmettre des informations d'événement correspondant à l'opération de lecture/écriture de mémoire, et le procédé comprend :
la réception, par le dispositif de commande de mémoire par l'intermédiaire du second canal, d'informations d'événement qui appartiennent à un premier événement et qui sont envoyées par le processeur, dans lequel le premier événement est un événement qui est réalisé par le processeur et dans lequel il est nécessaire d'accéder à un stockage de mémoire ; et
la gestion, par le dispositif de commande de mémoire, d'une antémémoire sur la base des informations d'événement, dans lequel l'antémémoire est configurée pour mettre en cache une partie de données qui se trouve dans le stockage de mémoire.

13. Procédé selon la revendication 12, dans lequel le premier événement comprend un ou plusieurs parmi ce qui suit : un événement de commutation de fil, un événement de parcours de table de pages ou un événement d'éviction de ligne de cache, dans lequel l'événement de commutation de fil est utilisé pour commuter un premier fil d'un état d'exécution à un état de préparation, le premier fil est un fil qui est exécuté par le processeur, l'événement de parcours de table de pages est utilisé pour interroger une adresse physique d'un bloc de données qui se trouve dans le stockage de mémoire et auquel le processeur doit accéder, et l'événement d'éviction de ligne de cache est utilisé pour évincer un bloc de données d'un cache du processeur.

14. Procédé selon la revendication 13, dans lequel le premier événement comprend l'événement de commutation de fil, et les informations d'événement comprennent des informations d'identification du premier fil.

15. Procédé selon la revendication 14, dans lequel l'antémémoire comprend une première antémémoire et une seconde antémémoire, et la première antémémoire est configurée pour mettre en cache une partie de données qui se trouve dans la seconde antémémoire ; et
la gestion, par le dispositif de commande de mémoire, d'une antémémoire sur la base des informations d'événement comprend :
la libération, par le dispositif de commande de mémoire, d'un premier espace de stockage sur la base des informations d'identification, dans lequel la première antémémoire comprend le premier espace de stockage, et le premier espace de stockage est utilisé pour stocker un bloc de données du premier fil.
